# EUROPEAN PATENT APPLICATION

(11) **EP 4 494 901 A1**
(43) Date of publication of application: **22.01.2025**
(21) Application number: 24186778.7
(22) Date of filing: 05.07.2024
(51) Int. Cl.: B60C 23/04

(54) **TIRE INFLATION PRESSURE MANAGEMENT APPARATUS, TIRE INFLATION PRESSURE MANAGEMENT SYSTEM AND TIRE INFLATION PRESSURE MANAGEMENT METHOD**

(30) Priority: 18.07.2023 JP 2023116490
(71) Applicant: Toyo Tire Corporation, Itami-shi, Hyogo 664-0847 (JP)
(72) Inventor: TSUCHIMOTO, Masashi, Hyogo 664-0847 (JP)
(74) Representative: Müller-Boré & Partner Patentanwälte PartG mbB

(57) **Abstract**

A tire inflation pressure management apparatus (30) includes an information acquisition unit (32), an alert generation unit (33), and an alert output unit (34). The information acquisition unit (32) acquires information on a tire inflation pressure measured by a sensor (10) provided in a tire (1). The alert generation unit (33) generates alert information when the tire inflation pressure acquired by the information acquisition unit (32) is below a first threshold value smaller than an appropriate value of the tire inflation pressure. The alert output unit (34) gives a notification outside after an elapse of a predetermined period to indicate that the alert information is generated by the alert generation unit (33) during the predetermined period.

## Description

The present disclosure relates to a tire inflation pressure management system and a tire inflation pressure management method for managing tires mounted on a vehicle.

Tires mounted on a vehicle are set to an appropriate tire inflation pressure, and when the inflation pressure decreases, the tire is filled with air in a maintenance to produce an appropriate tire inflation pressure again.

Patent literature 1 discloses a related-art tire management method. The tire management server used in this tire management method is connected to a vehicle terminal, a vehicle management terminal, and a dealer terminal via a communication network. The tire management server receives data indicating the condition of tires from the vehicle terminal or the dealer terminal, determines the condition of the tires based on this data, and, if it is determined to be necessary to deal with a tire urgently, communicates the tire condition to the relevant vehicle terminal or the dealer terminal of the dealer that can deal with the condition. If it is determined to be necessary to deal with a tire but that there is no urgency, the tire management server processes scheduling of the vehicle management terminal of the relevant vehicle and the dealer terminal of the designated dealer.

### [Patent Literature 1] JP2002-132994

In the tire management method described in patent literature 1, axle arrangement and maintenance-related information (tire inflation pressure, etc.) are displayed on the vehicle terminal, and a maintenance plan is formulated based on a notification from the vehicle terminal to the dealer. When the tire inflation pressure fluctuates due to vehicle driving or temperature, etc., generating alert information frequently, by the way, there is a problem in that notifications to the user are frequently generated and are troublesome. We have considered that there is room to improve the convenience of tire inflation pressure management by outputting generated alert information at an appropriate point of time in managing the tire inflation pressure of a vehicle operated and managed by a user such as a transportation company.

The present disclosure addresses the issue described above, and a purpose thereof is to provide a tire inflation pressure management system and a tire inflation pressure management method capable of improving the convenience of tire inflation pressure management by outputting alert information at an appropriate point of time.

A tire inflation pressure management apparatus according to an embodiment of the present disclosure includes: an information acquisition unit that acquires information on a tire inflation pressure measured by a sensor provided in a tire; n alert generation unit that generates alert information when the tire inflation pressure acquired by the information acquisition unit is below a first threshold value smaller than an appropriate value of the tire inflation pressure; and an alert output unit that gives a notification outside after an elapse of a predetermined period to indicate that the alert information is generated by the alert generation unit during the predetermined period.

Another embodiment of the present disclosure relates to a tire inflation pressure management method. The tire inflation pressure management method includes: acquiring information on a tire inflation pressure measured by a sensor provided in a tire; generating alert information when the tire inflation pressure acquired by the acquiring is below a first threshold value smaller than an appropriate value of the tire inflation pressure; and giving a notification outside after an elapse of a predetermined period to indicate that the alert information is generated by the generating during the predetermined period.

According to the present invention, the convenience of tire inflation pressure management can be improved by outputting alert information at an appropriate point of time.

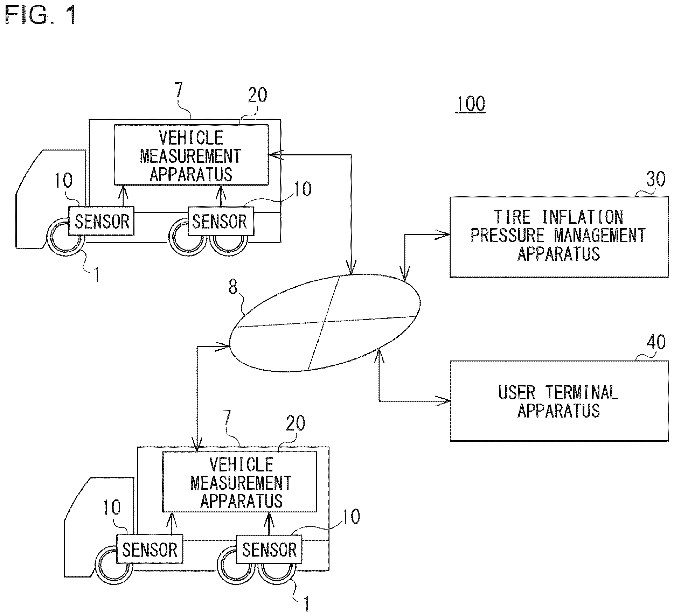

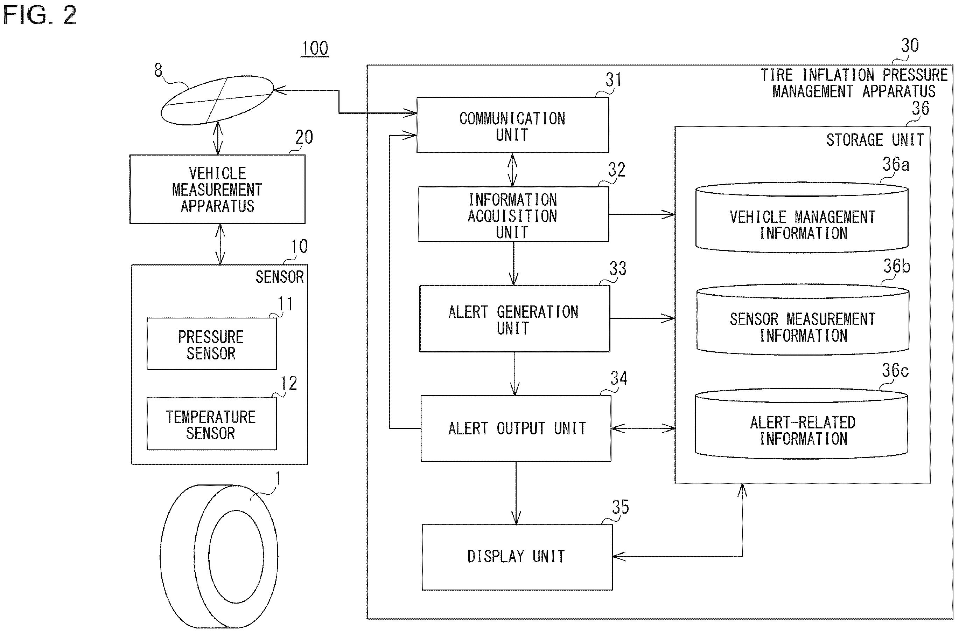

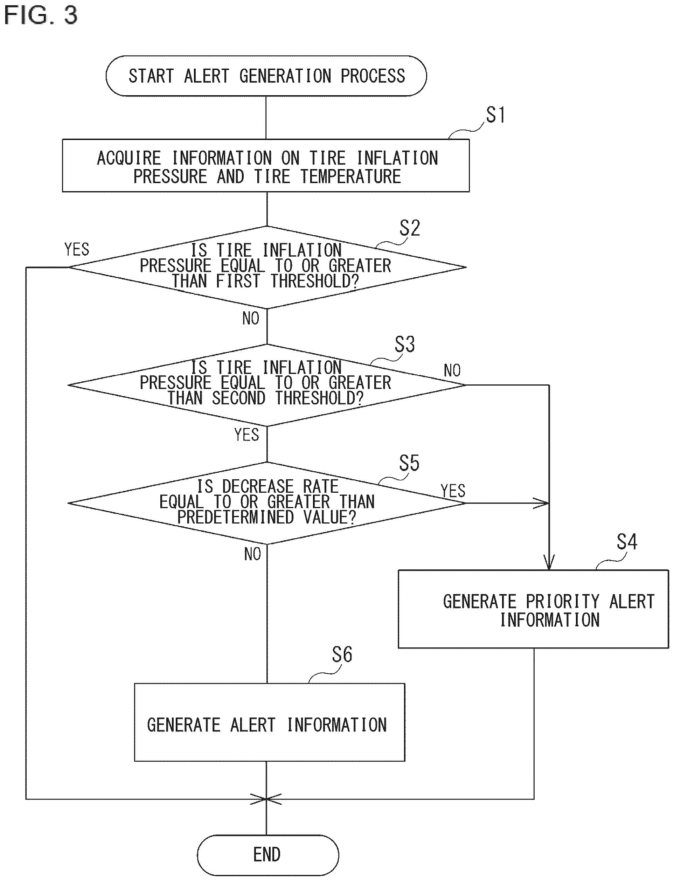

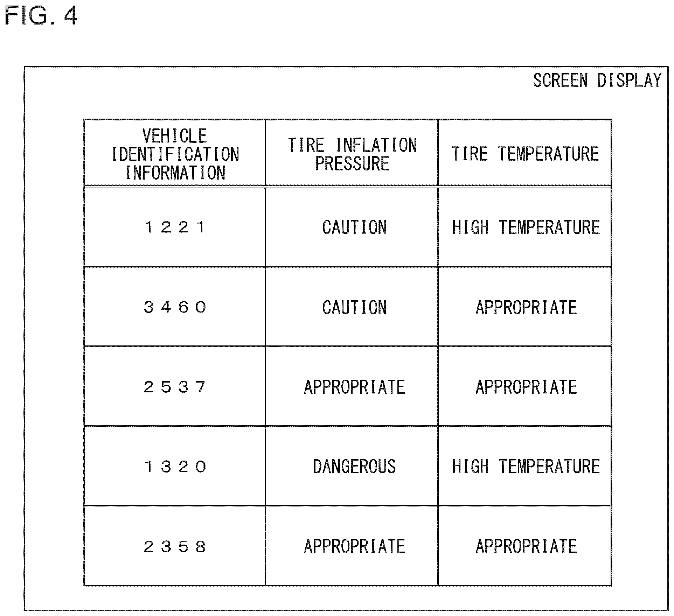

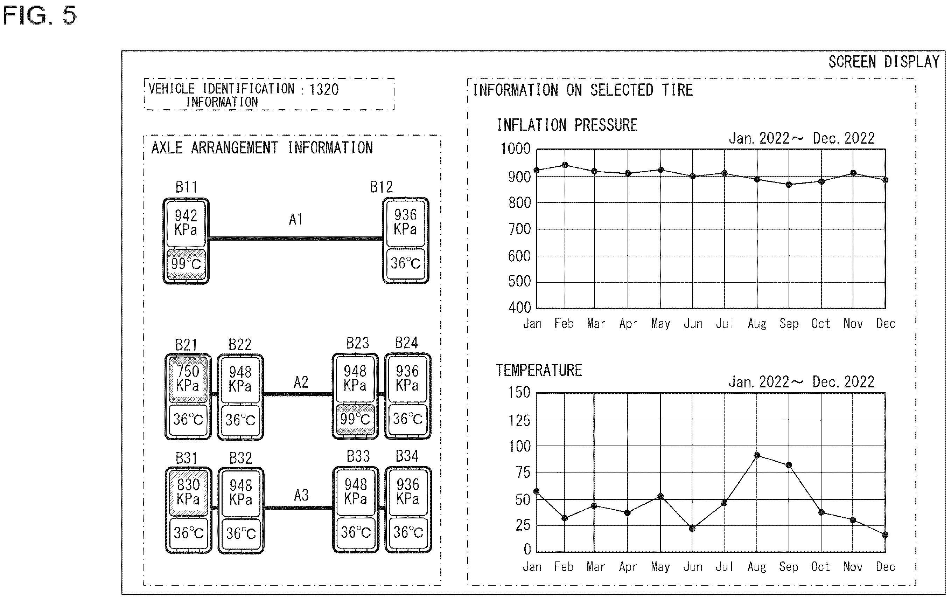

Fig. 1 is a schematic diagram showing an overall configuration of the tire inflation pressure management system according to the embodiment; Fig. 2 is a block diagram showing a functional configuration of the tire inflation pressure management apparatus; Fig. 3 is a flowchart showing steps of a process performed by the tire inflation pressure management system to generate an alert; Fig. 4 is a schematic diagram showing an example of screen display of the tire inflation pressure and tire temperature by the display unit; and Fig. 5 is a schematic diagram showing an example of screen display of the tire inflation pressure and tire temperature in one vehicle.

Hereinafter, the present disclosure will be described based on a preferred embodiment with reference to Figs. 1 through 5. Identical or like constituting elements and members shown in the drawings are represented by identical symbols, and a duplicate description will be omitted as appropriate. The dimension of the members in the drawings shall be enlarged or reduced as appropriate to facilitate understanding. Those of the members that are not material to the description of the embodiments are omitted in the drawings.

(Embodiment) Fig. 1 is a schematic diagram showing an overall configuration of a tire inflation pressure management system 100 according to the embodiment. The tire inflation pressure management system 100 includes a sensor 10, a vehicle measurement apparatus 20, a tire inflation pressure management apparatus 30, a user terminal apparatus 40, etc. The tire inflation pressure management system 100 collects and manages information on the inflation pressure and temperature of a tire 1 measured by the sensor 10 provided in each tire 1 mounted on the vehicle 7. The vehicle 7 is, for example, a transport truck operated and managed by a transport company, etc. A plurality of tires 1 are mounted on the vehicle 7.

The tire inflation pressure management apparatus 30 of the tire inflation pressure management system 100 compares the inflation pressure of the tire 1 actually measured with the optimal value of the tire inflation pressure and the preset threshold value, and generates alert information accordingly. The tire inflation pressure management apparatus 30 outputs the generated alert information outside according to the situation.

The tire inflation pressure management apparatus 30 outputs the alert information outside by displaying the alert information on a display apparatus provided in the apparatus itself. The user knows the alert information by viewing the alert information displayed on the display apparatus. Further, the tire inflation pressure management apparatus 30 outputs the alert information outside by transmitting an e-mail, etc., including the alert information to the user. The user receives the e-mail, etc., at the user terminal apparatus 40 and knows the alert information.

The user knows the alert information reported outside by the tire inflation pressure management apparatus 30 and plans maintenance for the tire 1 mounted on the vehicle 7. Maintenance for the tire 1 includes, for example, air filling to increase the tire inflation pressure of the tire 1 and replacement of the tire 1. The tire inflation pressure management system 100 improves the convenience of tire inflation pressure management by outputting the alert information from the tire inflation pressure management apparatus 30 at an appropriate point of time.

Fig. 2 is a block diagram showing a functional configuration of the tire inflation pressure management apparatus 30. The sensor 10 includes a pressure sensor 11 and a temperature sensor 12 provided in the tire 1. The pressure sensor 11 measures the tire inflation pressure. The temperature sensor 12 measures the tire temperature. The pressure sensor 11 and the temperature sensor 12 are, for example, provided in the air valve of the tire 1. The temperature sensor 12 may be provided directly in the tire 1 in order to measure the temperature of the tire 1 accurately.

The vehicle measurement apparatus 20 stores the tire inflation pressure and tire temperature measured by the sensor 10 and transmits them to the tire inflation pressure management apparatus 30 via a communication network 8. The sensor 10 starts measuring the tire inflation pressure and tire temperature when the engine of the vehicle 7 is started.

The vehicle measurement apparatus 20 stores the tire inflation pressure and tire temperature measured by the sensor 10 during a period that starts when the engine of the vehicle 7 is started to drive the vehicle 7 and ends when the engine stops. The vehicle measurement apparatus 20 transmits the tire inflation pressure and tire temperature to the tire inflation pressure management apparatus 30. For example, the vehicle measurement apparatus 20 transmits the tire inflation pressure and tire temperature stored every several minutes to several tens of minutes to the tire inflation pressure management apparatus 30. The time interval at which the vehicle measurement apparatus 20 transmits the tire inflation pressure and tire temperature to the tire inflation pressure management apparatus 30 is not limited to several minutes to several tens of minutes. The information on the tire inflation pressure and tire temperature transmitted from the vehicle measurement apparatus 20 to the tire inflation pressure management apparatus 30 also includes information on the mounting position of each tire in which the information is measured in the axle arrangement of the vehicle.

The tire inflation pressure management apparatus 30 includes a communication unit 31, an information acquisition unit 32, an alert generation unit 33, an alert output unit 34, a display unit 35, and a storage unit 36. The parts in the tire inflation pressure management apparatus 30 are implemented in hardware such as a processing circuit comprised of an electronic element exemplified by a CPU of a computer and a mechanical component, and in software such as a computer program. Fig. 2 depicts functional blocks implemented by the cooperation of these parts. Therefore, it will be understood by those skilled in the art that the functional blocks may be implemented in a variety of manners by a combination of hardware and software.

The communication unit 31 is communicably connected with the communication network 8 by wireless or wired communication, and communicates with the vehicle measurement apparatus 20. The information acquisition unit 32 acquires the information on the tire inflation pressure and tire temperature transmitted by the vehicle measurement apparatus 20 via the communication unit 31. The information on the tire inflation pressure and tire temperature acquired by the information acquisition unit 32 is assumed to be associated with identification information on the vehicle. The information acquisition unit 32 causes the storage unit 36 to store the acquired information on the tire inflation pressure and tire temperature. Further, the information acquisition unit 32 outputs the acquired information on the tire inflation pressure to the alert generation unit 33.

The storage unit 36 is a storage apparatus comprised of, for example, an SSD (Solid State Drive), a hard disk, a CD-ROM, a DVC, etc. The storage unit 36 stores vehicle management information 36a, sensor measurement information 36b, and alert-related information 36c.

The vehicle management information 36a is, for example, information related to a plurality of vehicles operated and managed by a transport company, etc., and includes the name of the vehicle, identification information on the vehicle allocated to each vehicle, axle arrangement information, etc. The axle arrangement information includes information on the mounting position of the tire in the axle arrangement. The sensor measurement information 36b is information on the tire inflation pressure and tire temperature acquired by the information acquisition unit 32 in association with each vehicle included in the vehicle management information 36a. The sensor measurement information 36b includes information on the date and time when the tire inflation pressure and tire temperature are measured. The alert-related information 36c is generated by the alert generation unit 33 and stored in the storage unit 36.

The alert generation unit 33 generates alert information when the tire inflation pressure acquired by the information acquisition unit 32 is below the first threshold value smaller than the appropriate value of the tire inflation pressure. Further, the alert generation unit 33 generates priority alert information when the tire inflation pressure acquired by the information acquisition unit is below the second threshold value smaller than the first threshold value.

The appropriate value of tire inflation pressure is set to a value that allows tire performance to be exhibited, in consideration of the specifications of the tire, the weight of the vehicle 7, etc. The tire 1 is filled with air so that the tire inflation pressure is accommodated within a predetermined range having the appropriate value at the center. The first threshold value is set to a value smaller than the appropriate value of the tire inflation pressure.

The first threshold value is set to a value equal to or smaller than the lower limit of a predetermined range having at the center the appropriate value, which is considered when the tire 1 is filled with air. The first threshold value is set to a value indicating that the tire inflation pressure has decreased beyond an appropriate range. Alternatively, the first threshold value may be set based on the rate of decrease in the fuel efficiency of the vehicle. For example, the tire inflation pressure at which the fuel efficiency decreases to 95% with respect to the fuel efficiency of the vehicle occurring when the tire inflation pressure has an appropriate value is calculated and is defined as the first threshold value. The decrease in the fuel efficiency according to the tire inflation pressure is, for example, calculated based on an increase in the road surface friction caused by a decrease in the tire inflation pressure.

The second threshold value is set to a value even smaller than the first threshold value. The second threshold value is set to a value indicating that the tire inflation pressure has decreased significantly and a trouble could be caused in the vehicle traveling on the tire 1. If the tire is deflated due to a damage to the rubber material of the tire 1, a decrease in the sealing performance of the air valve, a decrease in the intimacy of contact between the tire and the wheel, etc., a trouble could be caused in the vehicle traveling on the tire 1. A trouble could also be caused in the vehicle traveling on the tire 1 when the tire 1 is naturally deflated.

Further, a tire inflation pressure at which the fuel efficiency decreases to, for example, 90% with respect to the fuel efficiency of the vehicle occurring when the tire inflation pressure has an appropriate value may be calculated and defined as the second threshold value. The rate of decrease in the fuel efficiency associated with the first threshold value and the second threshold value is not limited to the examples given above and may be set based on individual circumstances such as past tire inflation pressure maintenance records at the transport company.

In the case the appropriate value (median) of tire inflation pressure is 900 KPa, for example, the first threshold value is set to 800 KPa, and the second threshold value is set to 750 KPa, etc. The appropriate value of tire inflation pressure, the first threshold value, and the second threshold value are not limited to these examples. For improvement of the fuel efficiency, the first threshold value may be set to a relatively higher value such as 850 KPa when the alert information is generated at a stage where the decrease in the tire inflation pressure is small.

The alert information is, as described above, generated when the tire inflation pressure decreases below the first threshold value. When the tire inflation pressure decreases below the second threshold value, the priority alert information is generated. Therefore, the alert information is generated when the tire inflation pressure is below the first threshold value and equal to or greater than the second threshold value. The alert information does not require immediate maintenance such as tire inspection and tire inflation pressure filling and calls attention of the user. The alert information may include information indicating that a "state of caution" is in place. The priority alert information alerts the user that immediate maintenance such as tire inspection and tire inflation pressure filling is required. The priority alert information may include information indicating that a "state of danger" or a "state of warning" is in place.

The alert generation unit 33 outputs the alert information and the priority alert information generated to the storage unit 36. The alert information and the priority alert information include relevant information such as the date and time when the tire inflation pressure is measured, the date and time when each information is generated, and the vehicle identification information. Further, the alert information and the priority alert information include information on the mounting position of the tire in which the tire inflation pressure has decreased in the axle arrangement. The alert information includes information indicating that a "state of caution" is in place, and the priority alert information includes information indicating that a "state of danger" or a "state of warning" is in place. The storage unit 36 stores the alert information and the priority alert information input from the alert generation unit 33 as the alert-related information 36c for each vehicle.

Further, when the alert generation unit 33 generates the priority alert information, the alert generation unit 33 outputs the priority alert information to the alert output unit 34.

The alert output unit 34 outputs the alert information generated by the alert generation unit 33 during a predetermined period to the user, including the driver of the corresponding vehicle, the worker who operates and manages the vehicle, etc., after an elapse of the predetermined period. The predetermined period is, for example, one day, i.e., from 8 a.m. on one day to 8 a.m. on the next day. In this case, the point of time after an elapse of the predetermined period occurs when the time is past 8 a.m. on the next day. Further, the predetermined period is set to be an arbitrary period such that the tire inflation pressure does not decrease, after decreasing to the first threshold value, to the second threshold value before an elapse of the period.

The alert output unit 34 generates one e-mail including the alert information generated during the predetermined period and transmits it to an e-mail address possessed by the user. The user receives the e-mail transmitted by the alert output unit 34 by an application for transmitting and receiving e-mails, etc., in the tire inflation pressure management apparatus 30 and the user terminal apparatus 40.

The user can know the alert information included in the e-mail. The user terminal apparatus 40 receives the e-mail transmitted by the alert output unit 34 via the communication network 8. The user terminal apparatus is, for example, an information processing apparatus such as a smartphone and a personal computer.

When the priority alert information is input from the alert generation unit 33, the alert output unit 34 outputs the priority alert information to the user, including the driver of the corresponding vehicle, the worker who operates and manages the vehicle, etc., before an elapse of the predetermined period. When the priority alert information is input from the alert generation unit 33, the alert output unit 34 may automatically generate and transmit an e-mail including the priority alert information immediately. The user can know the priority alert information by receiving the e-mail.

Even if the tire inflation pressure is below the first threshold value and equal to or greater than the second threshold value, the alert generation unit 33 generates the priority alert information instead of the alert information provided that the rate of decrease in the tire inflation pressure is equal to or greater than a predetermined value within a predetermined period (for example, one day). This is to alert the user immediately of a significant decrease in the tire inflation pressure in the form of the priority alert information.

The alert output unit 34 may output the priority alert information and the alert information to the display unit 35 included in the tire inflation pressure management apparatus 30 to display the information on the display unit 35 and notify the user accordingly. The display unit 35 includes a display apparatus such as a liquid crystal display, and displays priority alert information and alert information input from the alert output unit 34 on the display apparatus.

The display unit 35 reads out the information on the tire inflation pressure from the sensor measurement information 36b in the storage unit 36 and displays the information on the display apparatus. The display unit 35, for example, allows the user to know a change in tire inflation pressure by displaying a change in the tire inflation pressure in, for example, a predetermined period (1 day) on the display apparatus.

A description will now be given of the operation of the tire inflation pressure management system 100. Fig. 3 is a flowchart illustrating steps of a process performed by the tire inflation pressure management system 100 a generate an alert. The information acquisition unit 32 of the tire inflation pressure management apparatus 30 acquires the information on the tire inflation pressure and tire temperature from the vehicle measurement apparatus 20 (S1). The information acquisition unit 32 outputs the acquired information on the tire inflation pressure and tire temperature to the storage unit 36 to cause it to store the information, and outputs the information on the tire inflation pressure to the alert generation unit 33.

The alert generation unit 33 determines whether the tire inflation pressure is equal to or greater than the first threshold value (S2). When it is determined in step S2 that the tire inflation pressure is equal to or greater than the first threshold value (S2: YES), the process is terminated. When it is determined in step S2 that the tire inflation pressure is below the first threshold value (S2: NO), the alert generation unit 33 determines whether the tire inflation pressure is equal to or greater than the second threshold value (S3).

When it is determined in step S3 that the tire inflation pressure is below the second threshold value (S3: NO), the alert generation unit 33 generates the priority alert information (S4) and terminates the process. The priority alert information generated by the alert generation unit 33 is output to the alert output unit 34, and the alert output unit 34 immediately outputs the priority alert information to the user.

When it is determined in step S3 that the tire inflation pressure is equal to or greater than the second threshold value (S3: YES), the alert generation unit 33 determines whether the rate of decrease in the tire inflation pressure is equal to or greater than a predetermined value (S5). When it is determined in step S5 that the rate of decrease in the tire inflation pressure is equal to or greater than a predetermined value (S5: YES), the alert generation unit 33 proceeds to step S4, generates the priority alert information, and terminates the process.

When it is determined in step S5 that the rate of decrease in the tire inflation pressure is below the predetermined value (S5: NO), the alert generation unit 33 generates the alert information (S6) and terminates the process. The alert generation unit 33 stores the alert information generated in step S6 in the storage unit 36 as the alert-related information 36c. The alert output unit 34 reads the alert information generated by the alert generation unit 33 during a predetermined period from the alert-related information 36c stored in the storage unit 36, and outputs the read information to the user after an elapse of the predetermined period. The predetermined period is, for example, 1 day.

The tire inflation pressure management system 100 stores the alert information generated by the alert generation unit 33 during the predetermined period in the storage unit 36, and, after an elapse of the predetermined period, aggregates the alert information generated during the predetermined period in one e-mail and outputs the e-mail to the user. The tire inflation pressure management system 100 can improve the convenience of tire inflation pressure management by preventing the hassle of the alert information being frequently output to the user every time the information is generated, and outputting the information at an appropriate point of time after an elapse of the predetermined period. By knowing the alert information, the user can recognize that the tire inflation pressure is decreasing and caution is required.

When the tire inflation pressure is below the second threshold value, the tire inflation pressure management system 100 generates the priority alert information and outputs the priority alert information to the user before an elapse of the predetermined period. When the tire inflation pressure is below the second threshold value, the tire inflation pressure management system 100 may generate the priority alert information and immediately output the priority alert information to the user. When the tire inflation pressure decreases below the second threshold value, the tire inflation pressure management system 100 can inform the user that the tire inflation pressure has decreased significantly before an elapse of the predetermined period or immediately.

Even if the tire inflation pressure is below the first threshold value and equal to or greater than the second threshold value, the tire inflation pressure management system 100 generates the priority alert information provided that the rate of decrease in the tire inflation pressure within the predetermined period is equal to or greater than a predetermined value. The tire inflation pressure management system 100 can inform the user that the rate of decrease in the tire inflation pressure is large and that the tire inflation pressure is decreasing rapidly.

The tire inflation pressure management system 100 may set the first threshold value and the second threshold value based on the rate of decrease in the fuel efficiency of the vehicle. Thereby, the tire inflation pressure management system 100 can prompt the user to perform maintenance such as tire inflation pressure filling of the tire 1 for improvement of the fuel efficiency in vehicle driving.

The tire inflation pressure management system 100 stores the information on the tire inflation pressure and tire temperature information as the sensor measurement information 36b in the storage unit 36 of the tire inflation pressure management apparatus 30. The display unit 35 can provide the information on the tire inflation pressure relevant to a plurality of vehicles being operated and managed to the user in an easy-to-understand manner, by reading and displaying the information on the tire inflation pressure information stored in the storage unit 36.

Fig. 4 is a schematic diagram illustrating an example of screen display of the tire inflation pressure and tire temperature by the display unit 35. The display unit 35 displays the status of the tire inflation pressure and tire temperature of a plurality of vehicles on a screen. The tire inflation pressure is indicated as being "appropriate" if it is equal to or greater than the first threshold value, "caution" if it is below the first threshold value and equal to or greater than the second threshold value, and "dangerous" if it is below the second threshold value. When the information such as the tire inflation pressure from the sensor 10 cannot be received, an expression such as "signal unavailable" may be added to the display. As for the tire temperature, a notation such as "high temperature" is displayed when the temperature is higher than a predetermined threshold value, which is equal to or higher than an appropriate temperature.

Fig. 5 is a schematic diagram illustrating an example of a screen display of the tire inflation pressure and tire temperature in one vehicle. The display unit 35 displays axle arrangement information in the vehicle and graphs of the tire inflation pressure and tire temperature of the selected tire. The axle arrangement information represents the three axles A1, A2, and A3 in the longitudinal direction of the vehicle, and the tire mounting positions B11, B12, etc., on each axle.

A tire diagram schematically showing the tire is provided at each tire mounting position B11, etc., and a diagram for information showing the tire inflation pressure and tire temperature is provided. The diagram for information showing the tire inflation pressure is filled with, for example, yellow to indicate "caution" when the tire inflation pressure is below the first threshold value and equal to or greater than the second threshold value, and is filled with, for example, red to indicate "danger" when the tire inflation pressure is below the second threshold value. In the example shown in Fig. 5, the appropriate value (median) of the tire inflation pressure is 950 KPa, the first threshold value is set to 850 KPa, and the second threshold value is set to 800 KPa.

The tire inflation pressure management system 100 can provide the information on the tire inflation pressure and tire temperature to the user in an easy-to-understand manner by displaying the screen shown in Figs. 4 and 5 by the display unit 35.

(Variation) In the above-described embodiment, an example is shown in which the alert output unit 34 outputs the alert information and the priority alert information to the user by an e-mail. The application provided by the tire inflation pressure management apparatus 30 may be installed in the user terminal apparatus 40, and the alert information and the priority alert information may be output from the tire inflation pressure management apparatus 30 to the user terminal apparatus 40 on the application.

Further, the alert generation unit 33 of the tire inflation pressure management apparatus 30 may generate the alert information indicating that the sensor signal is not available when the information on the tire inflation pressure and tire temperature cannot be acquired from the sensor 10 for a predetermined time (for example, 120 minutes or more).

The transport company is not limited to a company that operates and manages a truck for transportation, and includes, for example, a taxi company. In addition, the vehicle is not limited to a truck vehicle or a taxi vehicle, but also includes a vehicle for rent of a rental company, a vehicle for sharing provided by a vehicle sharing company, etc.

A description will now be given of the feature of the tire inflation pressure management system 100 and the tire inflation pressure management method according to the embodiment. The tire inflation pressure management system 100 includes an information acquisition unit 32, an alert generation unit 33, and an alert output unit 34. The information acquisition unit 32 acquires the information on the tire inflation pressure measured by the sensor 10 provided in the tire 1. The alert generation unit 33 generates the alert information when the tire inflation pressure acquired by the information acquisition unit 32 is below the first threshold value smaller than the appropriate value of the tire inflation pressure. The alert output unit 34 gives a notification outside after an elapse of a predetermined period to indicate that that the alert information has been generated by the alert generation unit 33 during the predetermined period. Thereby, the tire inflation pressure management system 100 can improve the convenience of tire inflation pressure management by giving a notification at an appropriate point of time after an elapse of the predetermined period.

Further, the alert generation unit 33 generates the priority alert information when the tire inflation pressure acquired by the information acquisition unit 32 is below the second threshold value smaller than the first threshold value. When the priority alert information is generated, the alert output unit 34 outputs the priority alert information outside before an elapse of the predetermined period. Thereby, the tire inflation pressure management system 100 can inform the user that the tire inflation pressure has decreased significantly before an elapse of the predetermined period.

Further, when the tire inflation pressure acquired by the information acquisition unit 32 is equal to or greater than the second threshold value, the alert generation unit 33 generates the priority alert information provided that the rate of decrease in the tire inflation pressure within the predetermined period is equal to or greater than a predetermined value. Thereby, the tire inflation pressure management system 100 can notify the user that the rate of decrease in the tire inflation pressure is large and that the tire inflation pressure is decreasing rapidly.

Further, the first threshold value is set based on the rate of decrease in the fuel efficiency of the vehicle. Thereby, the tire inflation pressure management system 100 can prompt the user to perform maintenance such as tire inflation pressure filling of the tire 1 for improvement of the fuel efficiency in vehicle driving.

The tire inflation pressure management system 100 further includes a storage unit 36 that stores the information on the tire inflation pressure acquired by the information acquisition unit 32 and a display unit 35 that displays the information on the tire inflation pressure stored in the storage unit 36. Thereby, the tire inflation pressure management system 100 can provide the information on the tire inflation pressure to the user in an easy-to-understand manner.

The tire inflation pressure management method includes an information acquisition step, an alert generation step, and an alert output step. The information acquisition step acquires the information on the tire inflation pressure measured by the sensor 10 provided in the tire 1. The alert generation step generates the alert information when the tire inflation pressure acquired by the information acquisition step is below the first threshold value smaller than the appropriate value of the tire inflation pressure. The alert output step gives a notification outside after an elapse of the predetermined period to indicate that the alert information has been generated by the alert generation step during the predetermined period. According to this tire inflation pressure management method, the convenience of tire inflation pressure management can be improved by giving a notification at an appropriate point of time after an elapse of the predetermined period.

Given above is a description based on the embodiment of the present disclosure. The embodiment is intended to be illustrative only and it will be understood to those skilled in the art that variations and modifications are possible within the claim scope of the present disclosure and that such variations and modifications are also within the claim scope of the present disclosure. Accordingly, the description and drawings in the specification shall be interpreted as being illustration instead of limitation.

## Claims

1. A tire inflation pressure management apparatus (30) comprising:
an information acquisition unit (32) that acquires information on a tire inflation pressure measured by a sensor (10) provided in a tire (1);
an alert generation unit (33) that generates alert information when the tire inflation pressure acquired by the information acquisition unit (32) is below a first threshold value smaller than an appropriate value of the tire inflation pressure; and
an alert output unit (34) that gives a notification outside after an elapse of a predetermined period to indicate that the alert information is generated by the alert generation unit (33) during the predetermined period.

2. The tire inflation pressure management apparatus (30) according to claim 1,
wherein the alert generation unit (33) generates priority alert information when the tire inflation pressure acquired by the information acquisition unit (32) is below a second threshold value smaller than the first threshold value, and
wherein the alert output unit (34) outputs, when the priority alert information is generated, the priority alert information outside before an elapse of the predetermined period.

3. The tire inflation pressure management apparatus (30) according to claim 2,
wherein the alert generation unit (33) generates priority alert information when the tire inflation pressure acquired by the information acquisition unit (32) is equal or greater than the second threshold value provided that a rate of decrease in the tire inflation pressure within the predetermined period is equal to or greater than a predetermined value.

4. The tire inflation pressure management apparatus (30) according to any one of claims 1 to 3,
wherein the first threshold value is set to a inflation pressure based on a rate of decrease in a fuel efficiency of a vehicle (7).

5. The tire inflation pressure management apparatus (30) according to any one of claims 1 to 4, further comprising:
a storage unit (36) that stores the information on the tire inflation pressure acquired by the information acquisition unit (32); and
a display unit (35) that displays the information on the tire inflation pressure stored in the storage unit (36).

6. The tire inflation pressure management apparatus (30) according to any one of claims 1 to 5,
wherein the information acquisition unit (32) acquires, along with the information on the tire inflation pressure, information on a mounting position of the tire (1) in which the information is measured in an axle arrangement.

7. A tire inflation pressure management system (100) comprising:
the tire inflation pressure management apparatus (30) according to any one of claims 1 to 6; and
a sensor (10) provided in a tire (1) mounted on a vehicle (7) to measure a tire inflation pressure.

8. A tire inflation pressure management method comprising:
acquiring information on a tire inflation pressure measured by a sensor (10) provided in a tire (1);
generating alert information when the tire inflation pressure acquired by the acquiring is below a first threshold value smaller than an appropriate value of the tire inflation pressure; and
giving a notification outside after an elapse of a predetermined period to indicate that the alert information is generated by the generating during the predetermined period.
